**Europäisches Patentamt**

**European Patent Office**

**Office européen des brevets**

(19)

(11) **EP 1 274 047 A2**

(12) **EUROPÄISCHE PATENTANMELDUNG**

(43) Veröffentlichungstag:
**08.01.2003 Patentblatt 2003/02**

(51) Int Cl.⁷: **G07C 9/00**, G06K 9/62

(21) Anmeldenummer: **02100690.3**

(22) Anmeldetag: **11.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.07.2001 DE 10132013**

(71) Anmelder: **SIEMENS AKTIENGESELLSCHAFT**
**80333 München (DE)**

(72) Erfinder:
• **Küpper, Wolfgang Dr.**
 **80796, München (DE)**
• **Schuster, Matthias**
 **81547, München (DE)**

(54) **Multimodale Biometrie**

(57) Die Erfindung betrifft ein multimodales biometrisches Verfahren zur Authentifizierung zumindest eines Benutzers, bei dem zumindest ein Benutzer einer von zumindest zwei Klassen zugeordnet wird, bei dem Ähnlichkeitsmaße verwendet werden, die Maße für die Ähnlichkeit von für den Benutzer ermittelten biometrischen Daten mit Referenzdaten für eine der Klassen sind, bei dem für jede der zumindest zwei Klassen eine statistische Gesamtaussage über die Zugehörigkeit des Benutzers zu der Klasse in Abhängigkeit der Ähnlichkeitsmaße vorliegt, bei dem sich die statistische Gesamtaussage für jede der zumindest zwei Klassen aus der Verknüpfung der statistischen Aussagen zumindest zweier Einzelbiometrien für die jeweilige Klasse ergibt, wobei die statistische Aussagen der Einzelbiometrien statistische Aussagen über die Zugehörigkeit des Benutzers zu der Klasse in Abhängigkeit von den Ähnlichkeitsmaßen sind, und bei dem der Benutzer einer der zumindest zwei Klassen zugeordnet wird, wenn ein bestimmtes Zuordnungskriterium erfüllt wird.

EP 1 274 047 A2

Printed by Jouve, 75001 PARIS (FR)

**Beschreibung**

Die Erfindung betrifft ein multimodales biometrisches Verfahren sowie eine Anordnung und ein Programmprodukt zur Ausführung des multimodalen biometrischen Verfahrens.

Zur Authentifizierung von Benutzern können biometrische Verfahren angewendet werden, d.h. der Benutzer wird anhand von Körpermerkmalen oder charakteristischen Verhaltensweisen erkannt. Multimodale Biometrie integriert zwei oder mehrere Einzelbiometrien (z.B. Sprecher-, Unterschrift-, Handgeometrie-, Fingerabdruck-, Iris-, Gesichtserkennung) in ein Gesamtsystem. Biometrische Verfahren mit Einzelbiometrien sind beispielsweise in WO 98/24051, WO 98/25228, WO 98/50880, WO 99/08223 in Form von dynamischen Unterschriftsverifikationen, in DE 19952049 A1 in Form einer Sprecherverifikation und in US 5 533 177, US 5 751 843, US 5 828 779, EP 0 560 779 B1, EP 0 713 592 B1, EP 0 800 145 A2 und WO 98/38533 als Verfahren zur Handerkennung oder zur Bestimmung der Position einer Hand offenbart.

Multiple Biometrien können zu höherer Sicherheit und/oder zu gesteigertem Komfort beitragen. Die Zuordnungen für die Einzelbiometrien müssen dabei optimal kombiniert bzw. fusioniert werden.

An ein multimodales biometrisches System können im Einzelnen folgende Forderungen gestellt werden:

- Höhere Sicherheit als beste Einzelbiometrie
- Schnelle Zuordnungszeit
- Niedrige und insbesondere vorgegebene mittlere Falschakzeptanzrate FAR
- Niedrige und insbesondere vorgegebene mittlere Falschrückweisungsrate FRR

Biometrische Verfahren sind Zwei-Klassen-Zuordnungsprobleme, bei denen die Merkmale der Klasse der Originale (autorisierte Benutzer) von den Merkmalen der Fälscherklasse optimal zu trennen sind. Auch multimodale Biometrien stellen binäre Klassifikationsprobleme dar, wobei die Dimension des Merkmalsraumes von der Anzahl der verwendeten Einzelbiometrien abhängt.

Es existieren unterschiedliche Ansätze, mehrere Einzelbiometrien in einem multimodalen biometrischen Verfahren zu kombinieren. Diese sind:

- Logische Verknüpfung: UND-/ODER-/kombinierte Verknüpfung; nach Dieckmann, U. et al. "SESAM: A biometric person identification system using sensor fusion", Pattern Recognition Letters 18, 1997, pp. 827-833.
- Gewichteter Gesamtscore: Aus Einzelscores bzw. -kosten, für Gesamtschwelle; nach Brunelli, R. und Falavigna, D. "Person Identification Using Multiple Cues", IEEE. Transactions on Pattern Analysis and Machine Intelligence, Vol. 17, No. 10, 1995.
- Support Vector Machine (SVM) : Support-Vektoren, welche die Klassen trennen, werden durch Trainingsprozess ermittelt; nach Ben-Yacoub, S. "Multi-Modal Data Fusion For Person Authentication Using SVM", IDIAP Research Report 98-07 Martigny-Valais-Suisse, 1998.
- Bayes'sche Statistik: Normalverteilungen der Scores werden vorausgesetzt; nach Bigün, E. S. et al. "Expert Conciliation for Multi Modal Person Authentication Systems by Bayesian Statistics", Proceedings 1st Int. Conf. on Audio-& Video-Based Personal Authentication, 1997, pp.327-334.
- Neuronale Netze (NN): Datengetriebene Klassentrennung; nach Brunelli, R. und Falavigna, D. "Person Identification Using Multiple Cues", IEEE. Transactions on Pattern Analysis and Machine Intelligence, Vol. 17, No. 10, 1995.

In allen biometrischen Verfahren werden Referenz- und Testmerkmale miteinander verglichen und es wird anhand von Ähnlichkeitsmaßen entschieden, ob sie von demselben Benutzer stammen. Anders ausgedrückt sind die Ähnlichkeitsmaße Maße für die Ähnlichkeit (Übereinstimmung) von für den Benutzer ermittelten biometrischen Daten mit Referenzdaten von Benutzern für die jeweilige Klasse. Maße für die Ähnlichkeit sind entweder Abstände (Distanzen), sogenannte Kosten, zwischen Referenz- und Testmerkmalen oder -mustern oder sogenannte Scores, welche ein Maß für die Wahrscheinlichkeit der Referenz- und Testmerkmale darstellen, vom selben Benutzer zu stammen. Der Wertebereich der Kosten liegt zwischen Null und einem gewissen Maximalwert, wobei kleine Kosten hoher Ähnlichkeit und große Kosten geringer Ähnlichkeit entsprechen. Die Werte der Scores liegen im Bereich zwischen Null und Eins. Scores von Eins stehen für maximale und Scores von Null für minimale Übereinstimmung.

Zum Stand der Technik sei hier beispielhaft die Kombination von Biometrien durch logische Verknüpfungen erläutert, welche bei aktuellen kommerziellen multimodalen Systemen hauptsächlich eingesetzt wird. Eine UND-Verknüpfung ist die logische Kombination von n Biometrien, wobei ein Benutzer nur akzeptiert wird, wenn für alle Einzelbiometrien die Kosten ($K_1$, $K_2$,..,$K_n$) unterhalb bzw. die Scores ($S_1$, $S_2$,..,$S_n$) oberhalb bestimmter Schwellen ($T_1$, $T_2$,..,$T_n$) liegen.

Kriterium logische UND-Verknüpfung bei Kosten:

$$(K_1 < T_1)\&(K_2 < T_2)\&...\&(K_n < T_n)$$

Kriterium logische UND-Verknüpfung bei Scores:

$$(S_1 > T_1)\&(S_2 > T_2)\&...\&(S_n > T_n)$$

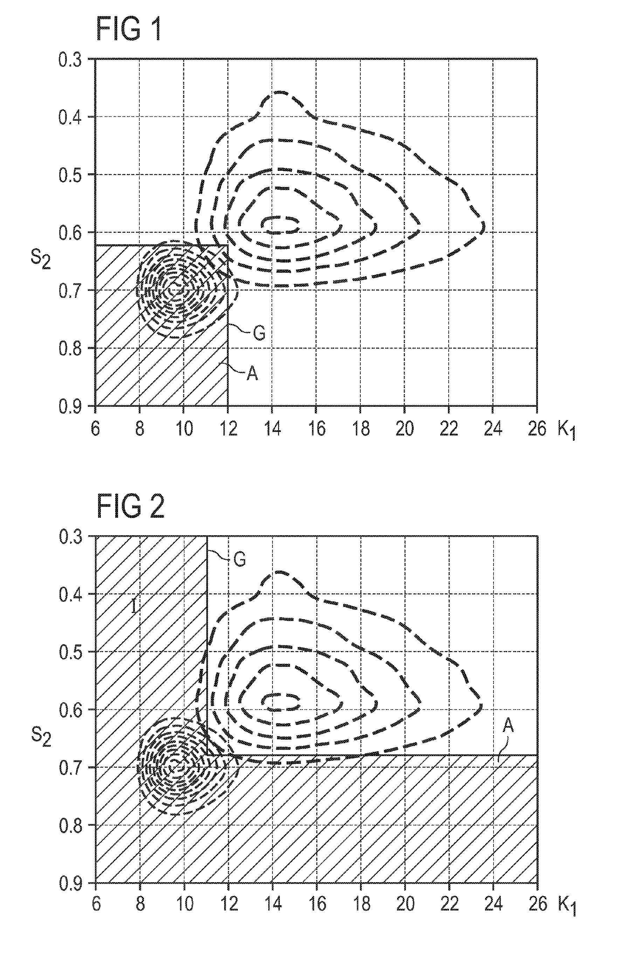

In Figur 1 ist beispielhaft eine mögliche Zuordnungsgrenze G und der zugehörige Annahmebereich A (schraffierter Bereich) der Kosten und Scores bei einer logischen UND-Verknüpfung für die Kombination zweier weiter unten genauer erläuterter Biometrien 1 und 2 dargestellt. Auf der Abszisse sind die Kosten $K_1$ der Biometrie 1 und auf der Ordinate die Scores $S_2$ der Biometrie 2 aufgetragen.

Bei der ODER-Kombination muss ein Benutzer nur bei einer Biometrie Kosten unter bzw. Scores über einem bestimmten Schwellwert erzeugen.

Kriterium logische ODER-Verknüpfung bei Kosten:

$$(K_1 < T_1)|(K_2 < T_2)|...|(K_n < T_n)$$

Kriterium logische ODER-Verknüpfung bei Scores:

$$(S_1 > T_1)|(S_2 > T_2)|...|(S_n > T_n)$$

Figur 2 zeigt beispielhaft eine Zuordnungsgrenze G und den zugehörigen Annahmebereich A (schraffierter Bereich) der Kosten bzw. Scores bei einer logischen ODER-Verknüpfung für die Kombination von Biometrie 1 und Biometrie 2.

Diese existierenden Ansätze und Systeme haben teilweise einige Nachteile. Dies sind konkrete Annahmen über die Einzelbiometrien, etwa dass Kosten der Einzelbiometrien normalverteilt sind, hoher Trainingsaufwand (NN, SVM), unzureichende Fehlerraten und schwierige Modifikation für das Verwenden anderer Biometrien, Systeme oder einer anderen Biometrieanzahl, da die Kombinationen, wie z. B. Gewichte bei der Methode der gewichteten Gesamtscores, auf die verwendeten Systeme, Biometrien und ihre Anzahl optimiert sind.

Der Erfindung liegt die Aufgabe zugrunde, eine multimodale Biometrie zu entwickeln, bei der die geschilderten Nachteile vermieden werden und bei der insbesondere eine gewünschte Falschakzeptanzrate und daher ein gewisser Sicherheitsgrad einstellbar bzw. selektierbar ist.

Diese Aufgabe wird durch ein multimodales biometrisches Verfahren, eine Anordnung und ein Programmprodukt mit den Merkmalen der unabhängigen Ansprüche gelöst.

Bei dem multimodalen biometrischen Verfahren wird zumindest ein Benutzer einer von zumindest zwei Klassen zugeordnet. Diese zwei Klassen sind insbesondere die Klasse der Originale und die Fälscherklasse.

Weiterhin werden bei dem Verfahren Ähnlichkeitsmaße verwendet, die jeweils Maße für die Ähnlichkeit von für den Benutzer ermittelten biometrischen Daten mit Referenzdaten für eine der Klassen sind. Als Ähnlichkeitsmaße empfehlen sich insbesondere die oben erläuterten Kosten und/oder Scores.

Aus der Verknüpfung der statistischen Aussagen zumindest zweier Einzelbiometrien für die jeweilige Klasse wird eine statistische Gesamtaussage ermittelt. Die statistischen Aussagen der Einzelbiometrien sind wie die statistische Gesamtaussage statistische Aussagen über die Zugehörigkeit des Benutzers zu der Klasse in Abhängigkeit von den Ähnlichkeitsmaßen.

Die Zuordnung des Benutzers zu den Klassen erfolgt nunmehr durch den Vergleich der statistischen Gesamtaussagen der Klassen. Wenn ein Zuordnungskriterium erfüllt wird, das von den statistischen Gesamtaussagen abhängt, wird der Benutzer der einen der zumindest zwei Klassen zugeordnet.

Im Gegensatz zu den zuvor geschilderten Verfahren werden also die statistischen Aussagen der Einzelbiometrien erst verknüpft und dann die sich ergebenden statistischen Gesamtaussagen ausgewertet und nicht erst die statistischen Aussagen der Einzelbiometrien ausgewertet und dann die Ergebnisse verknüpft. Wie weiter unten ausgeführt, lassen sich dadurch erheblich bessere Ergebnisse erzielen und das multimodale biometrische Verfahren kann wesentlich genauer spezifischen Anforderungen angepasst werden.

Vorzugsweise ist das multimodale biometrische Verfahren als Verfahren zur Authentifizierung und/ oder Authentisierung des Benutzers ausgestaltet. Die zwei Klassen sind dann die Klasse der Originale und die Fälscherklasse.

Die statistische Aussage einer Einzelbiometrie ist zweckmäßigerweise eine Wahrscheinlichkeitsdichte. Insbesondere in diesem Fall ist die Verknüpfung der statistischen Aussagen zumindest zweier Einzelbiometrien, aus der sich die statistische Gesamtaussage ergibt, bei hinreichender statistischer Unabhängigkeit der Einzelbiometrien die Multiplikation der statistischen Aussagen für die Einzelbiometrien.

Auch die statistische Gesamtaussage ist zweckmäßigerweise eine Wahrscheinlichkeitsdichte.

Die Ähnlichkeitsmaße für eine Einzelbiometrie enthalten zur leichteren Verrechnung jeweils entweder Kosten oder Scores. Für unterschiedliche Einzelbiometrien können aber problemlos unterschiedliche Ähnlichkeitsmaße verwendet werden, von denen eines Kosten und das andere Scores enthält.

Zweckmäßigerweise sind die statistischen Aussagen und/oder die statistischen Gesamtaussagen für eine leichtere Verrechnung normiert.

Ein besonderer Vorteil des Verfahrens besteht in der Möglichkeit der präzisen und sinnvollen Steuerung der Zuordnungsraten zu bestimmten Klassen und damit auch einer Steuerung der Falschakzeptanzrate FAR und/oder der Falschrückweisungsrate FRR. Dazu wird der vorgegebene Wert so gewählt wird, dass sich eine gewünschte Zuordnungsrate von Benutzern, entsprechend einer gewünschten Falschakzeptanzrate FAR und/oder einer gewünschten Falschrückweisungsrate FRR, zu der einen der zumindest zwei Klassen ergibt.

In einer bevorzugten Ausbildung wird der Benutzer ab einem vorgegebenen Verhältnis der statistischen Gesamtaussage über die Zugehörigkeit des Benutzers zu der einen der zumindest zwei Klassen zu der statistischen Gesamtaussage über die Zugehörigkeit des Benutzers zur anderen bzw. zu den anderen der zumindest zwei Klassen der einen der zumindest zwei Klassen zugeordnet. Dieses Verhältnis kann durch entsprechende algebraische Umformungen auch als Differenz oder ein anderes gleichwertiges Kriterium formuliert sein.

Bei dieser Ausbildung ist im einfachsten Fall der vorgegebene Wert genau oder in etwa gleich Eins.

Wiederum besteht aber ein besonderer Vorteil des Verfahrens in der Möglichkeit der präzisen und sinnvollen Steuerung der Zuordnungsraten zu bestimmten Klassen und damit auch einer Steuerung der Falschakzeptanzrate FAR und/oder der Falschrückweisungsrate FRR. Dazu wird der vorgegebene Wert so gewählt wird, dass sich eine gewünschte Zuordnungsrate von Benutzern, entsprechend einer gewünschten Falschakzeptanzrate FAR und/oder einer gewünschten Falschrückweisungsrate FRR, zu der einen der zumindest zwei Klassen ergibt.

In einer anderen bevorzugten Ausbildung der Erfindung kann alternativ oder zusätzlich zum Zuordnungskriterium des Verhältnisses der statistischen Gesamtaussage über die Zugehörigkeit des Benutzers zu der einen der zumindest zwei Klassen zu der statistischen Gesamtaussage über die Zugehörigkeit des Benutzers zur anderen bzw. zu den anderen der zumindest zwei Klassen auch ein anderes Zuordnungskriterium herangezogen werden. Dieses besteht darin, dass der Benutzer einer der zumindest zwei Klassen zugeordnet wird, wenn die statistische Gesamtaussage über die Zugehörigkeit des Benutzers zu dieser Klasse einen vorgegebenen Grenzwert überschreitet.

Eine zusätzliche Anwendung dieses Zuordnungskriteriums empfiehlt sich insbesondere, wenn die Falschakzeptanzrate FAR bei alleiniger Anwendung des zuerst genannten Kriteriums über einem bestimmten Sollwert liegt.

Schließlich kann alternativ oder zusätzlich noch ein drittes Zuordnungskriterium angewendet werden. Dies besteht darin, dass der Benutzer einer der zumindest zwei Klassen zugeordnet wird, wenn die statistische Gesamtaussage über die Zugehörigkeit des Benutzers zu der anderen bzw. zu den anderen der zumindest zwei Klassen unter einem vorgegebenen Grenzwert liegt.

Wie beim zuerst genannten Zuordnungskriterium ergibt sich auch für die beiden zuletzt genannten ein besonderer Vorteil aus dem Grundgedanken der Erfindung, die statistischen Aussagen der Einzelbiometrien zuerst zu verrechnen und dann die Gesamtaussage auszuwerten. Dieser besteht darin, dass der vorgegebene Grenzwert so gewählt werden kann, dass sich eine gewünschte Zuordnungsrate, entsprechend einer gewünschten Falschakzeptanzrate FAR oder einer gewünschten Falschrückweisungsrate FRR, ergibt. Darüber erhält man eine einfache und sinnvolle Ergebnisse liefernde Steuerung des Verfahrens.

Eine Anordnung, die eingerichtet ist, eines der geschilderten Verfahren auszuführen, lässt sich zum Beispiel durch entsprechendes Programmieren und Einrichten eines Computers oder einer Rechenanlage realisieren.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Softwarecodeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt

Figur 3 eine Darstellung der Kosten einer Biometrie 1;

Figur 4 eine Darstellung der Scores einer Biometrie 2;

Figur 5 die Wahrscheinlichkeitsdichte der Kosten der Biometrie 1;

Figur 6 die Wahrscheinlichkeitsdichte der Scores der Biometrie 2;

Figur 7 zweidimensionale Wahrscheinlichkeitsdichten der Ähnlichkeitsmessungen der Originale und Fälscher für Biometrie 1 und Biometrie 2;

Figur 8 die Zugehörigkeitsgrenze;

Figur 9 Zuordnungsgrenzen bei Zuordnungskriterien I und IIa;

Figur 10 Zuordnungsgrenzen bei Zuordnungskriterien I und IIb;

Figur 11 Zuordnungsgrenze bei vorgegebenem Wert V;

Figur 12 einen Vergleich der Einzelbiometrien mit den erfindungsgemäßen multimodalen Verfahren und

Figur 13 einen Vergleich multimodaler Verfahren.

Das erfindungsgemäße Verfahren macht keine Annahme über die funktionale Verteilung der Kosten bzw. Scores, sondern verwendet die gemessenen Kosten- bzw. Scoreverteilungen der Einzelbiometrien. In dem hier dargestellten Beispiel werden eine Biometrie 2, welche auf Scores basiert, und eine Biometrie 1, welche Kosten verwendet, zu einer multimodalen Biometrie zusammengesetzt.

Die Grundlage des Verfahrens bilden die mehrdimensionalen Wahrscheinlichkeitsdichten der Kosten bzw. Scores für Originale und Fälscher. Diese lassen sich aus den gemessenen Kostenverteilungen der Einzelbiometrien berechnen.

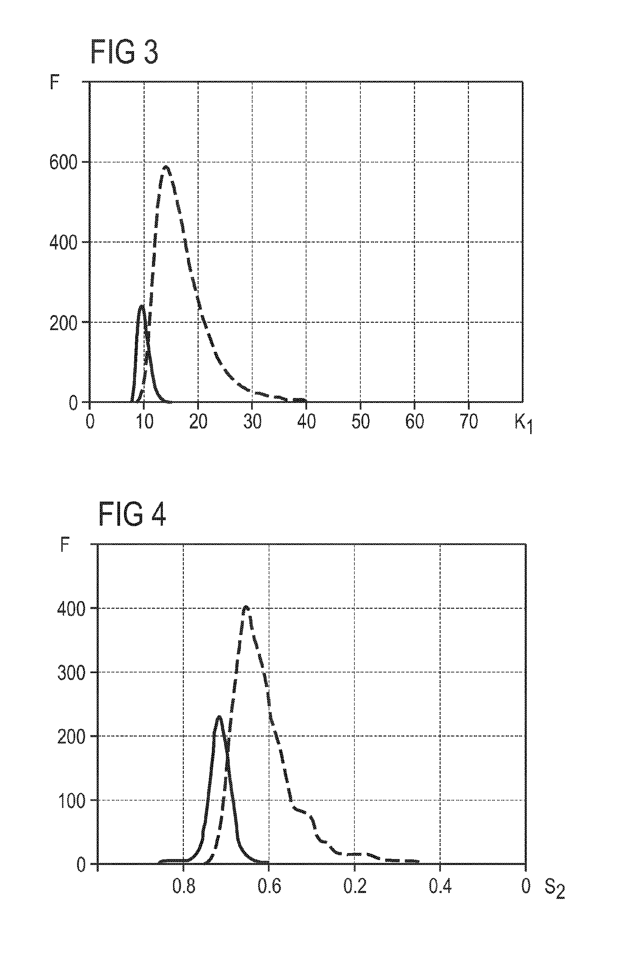

Die Figuren 3 und 4 zeigen beispielhaft für zwei unterschiedliche Biometrien die Kosten- bzw. Scoreverteilungen der Originale (durchgezogen) und der Fälscher (gestrichelt), welche durch Anwendungsdaten ermittelt werden können. Aufgetragen ist die Häufigkeit F (Anzahl) der Ereignisse als statistische Aussage über den Kosten $K_1$ der Biometrie 1 bzw. den Scores $S_2$ der Biometrie 2. Im weiteren werden die Verfahren anhand dieser Beispielkombination erklärt.

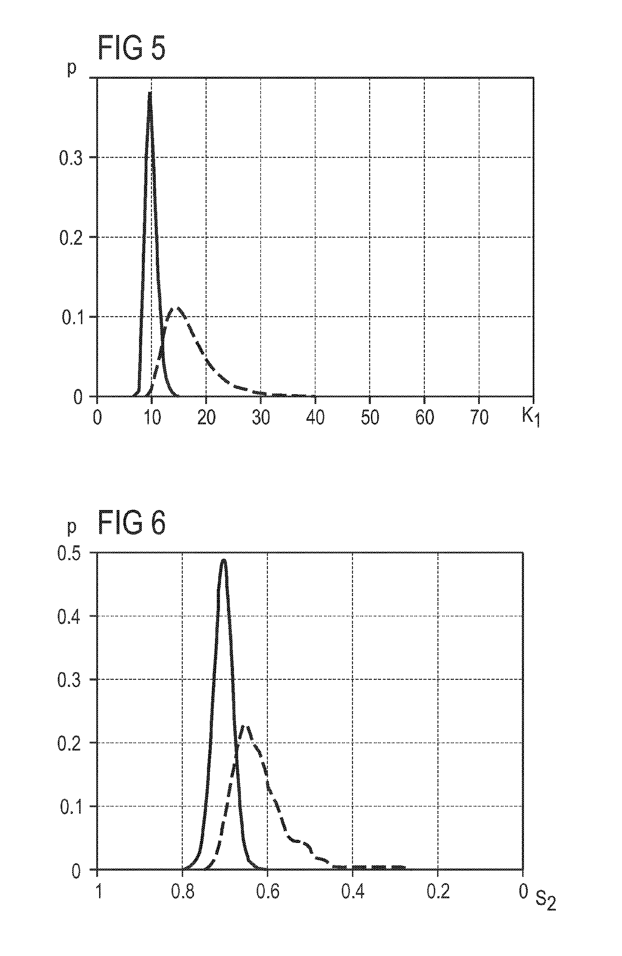

Aus diesen Kosten- bzw. Scoreverteilungen werden geeignetere statistische Aussagen in Form von Wahrscheinlichkeitsdichten der Ähnlichkeitsmaße, die ihrerseits in Form von Kosten bzw. Scores vorliegen, für die Einzelbiometrien berechnet, indem die Integrale über die Einzelverteilungen auf Eins normiert werden. Die Figuren 5 und 6 zeigen diese Wahrscheinlichkeitsdichten $p_o(x)$, $p_f(x)$ der Biometrie 1 und $p_o(y)$, $p_f(y)$ der Biometrie 2 für Originale (durchgezogen) und Fälscher (gestrichelt).

Für statistisch voneinander unabhängige Biometrien ist die statistische Gesamtaussage in Form der mehrdimensionalen Wahrscheinlichkeitsdichte der Kosten/Scores für Originale bzw. Fälscher das Produkt aus den Wahrscheinlichkeitsdichten der Einzelbiometrien für Originale bzw. Fälscher. Die Annahme der statistischen Unabhängigkeit ist für die eingangs angeführten Biometrien (z.B. Sprecher-, Unterschrift-, Handgeometrie-, Fingerabdruck-, Iris-, Gesichtserkennung) hinreichend erfüllt, solange nicht z.B. synchron aufgenommene Mundbewegung und Sprache kombiniert werden. Bei von unterschiedlichen Populationen erstellten Datenbanken sollte die Annahme stets erfüllt sein. Dann können alle Ähnlichkeitsmaße (Kosten und/oder Scores) der einen Biometrie mit allen der jeweils anderen Biometrie(n) kombiniert werden und die geeigneten statistischen Einzelaussagen zu einer Gesamtaussage durch Multiplikation der Wahrscheinlichkeitsdichten verknüpft werden.

Man kann jedoch in jedem Fall bei n Biometrien auch einfach mit den n-Tupeln von Ähnlichkeitsmaßen arbeiten und daraus die n-dimensionale Gesamt-Wahrscheinlichkeitsdichte durch Abzählen erhalten. Dieses Verfahren gilt auch für statistisch abhängige Biometrien; dabei werden jedoch nur jeweils gemeinsam gemessene Paare oder m-Tupel (m kleiner gleich n) kombiniert.

Im Falle des statistischen Unabhängigkeit darf man alle Werte der einen Biometrie mit allen Werten der anderen Biometrien kombinieren und erhält so eine Gesamt-Wahrscheinlichkeitsdichte, die dem Produkt der Einzel-Wahrscheinlichkeitsdichten entspricht.

Im kontinuierlichen Fall gilt für zwei statistisch unabhängige Biometrien:

$$p_o(x,y) = p_o(x) \cdot p_o(y)$$

Verteilung der Originale

$$p_f(x,y) = p_f(x) \cdot p_f(y)$$

Verteilungen der Fälscher

Bei computergestützten Auswertungen werden jedoch Kosten-/Scoreintervalle betrachtet. Es seien M Intervalle für Biometrie 1 und N Intervalle für Biometrie 2 gegeben. In diesem diskreten Fall verwendet man eine Matrix $M_f$ für die Wahrscheinlichkeitsdichte der Fälscherkosten/-scores und eine Matrix $M_o$ für die Wahrscheinlichkeitsdichte der Kosten/Scores der Originale:

$$M_o(m,n) = p_o(m) \cdot p_o(n)$$

für m=1, ...,M; n=1,...,N;

$$M_f(m,n) = p_f(m) \cdot p_f(n)$$

für m=1,...,M; n=1,...,N.

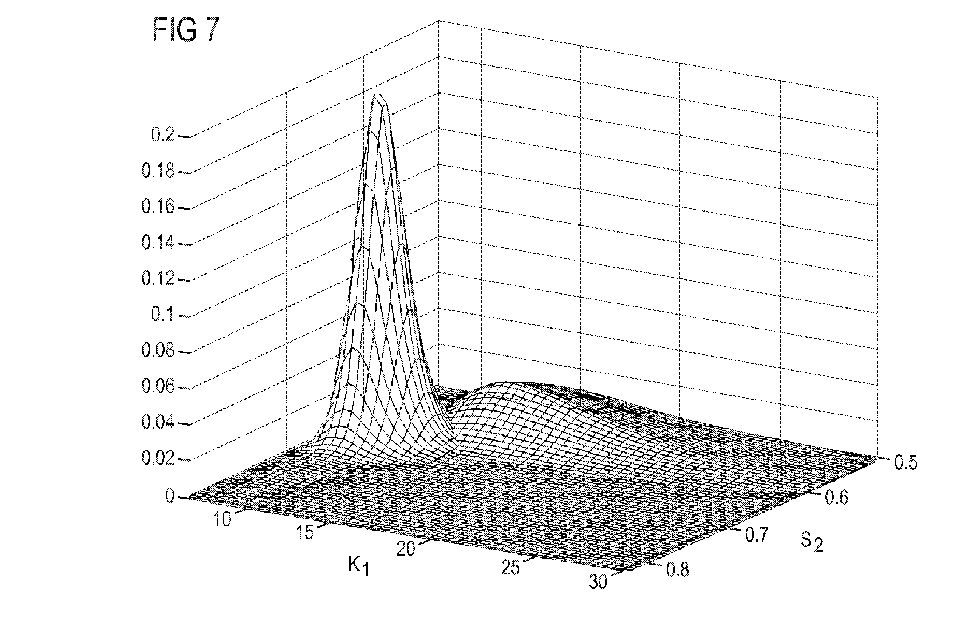

Die zweidimensionalen Wahrscheinlichkeitsdichten der Ähnlichkeitsmessungen für Originale und Fälscher für die kombinierten Biometrien 1 und 2 zeigt Figur 7.

Die Schnittkurve der beiden Wahrscheinlichkeitsdichteverteilungen ist die Zugehörigkeitsgrenze. An diesen Stellen ist die Wahrscheinlichkeit eines Punktes der Ähnlichkeitsmessungen, zur Klasse der Fälscher zu gehören, gleich der Wahrscheinlichkeit, zur Klasse der Originale zu gehören:

$$M_o(m,n) = M_f(m,n)$$

Zugehörigkeitsgrenze

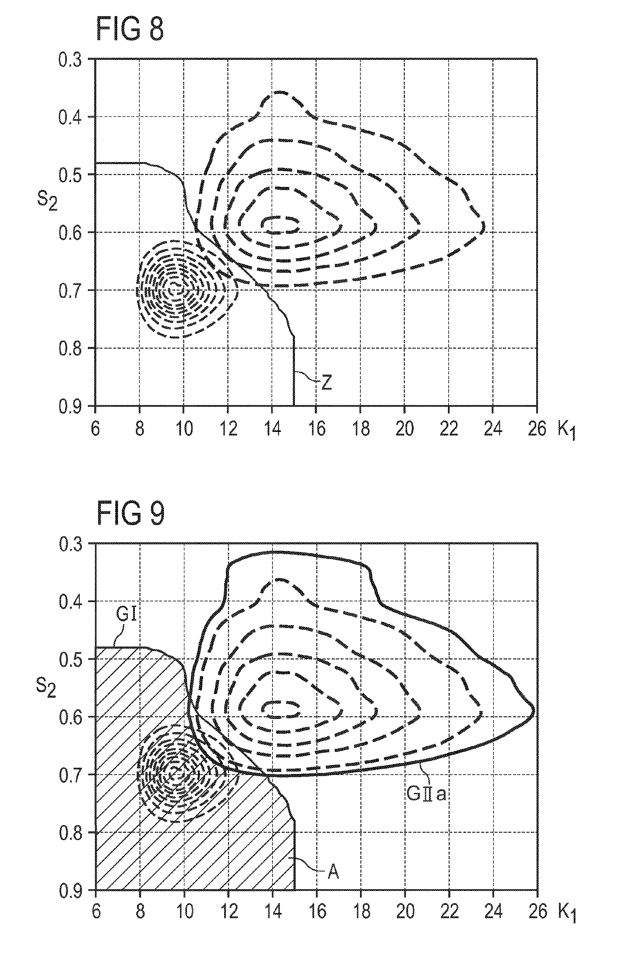

In Figur 8 ist diese Zugehörigkeitsgrenze Z für die Biometrie 1 und Biometrie 2 dargestellt. Des weiteren sind Linien konstanter Wahrscheinlichkeitsdichte der Ähnlichkeitsmessungen der Originale (punktiert) und der Fälscher (gestrichelt) abgebildet.

Das multimodale biometrische Verfahren verwendet verschiedene Zuordnungskriterien, welche auf den mehrdimensionalen Wahrscheinlichkeitsdichten der Ähnlichkeitsmessungen der Fälscher und Originale basieren. Diese Zugehörigkeitskriterien können alternativ oder gleichzeitig angewandt werden.

Das erste Zuordnungskriterium ist die Zugehörigkeit zu einer der beiden Verteilungen. Ein Kosten-/Scorepunkt im mehrdimensionalen Raum wird hierbei derjenigen Verteilung zugeordnet, welche an diesem Punkt die höhere Wahrscheinlichkeitsdichte besitzt. Die Zuordnungsgrenze ist daher die Zugehörigkeitsgrenze.

Im Falle von zwei Biometrien wird ein Ähnlichkeitspunkt mit den Koordinaten (m,n) der Gruppe der Originale zugeordnet, wenn gilt:

$$M_o(m,n) > M_f(m,n)$$

Zuordnungskriterium I

Dies entspricht der Aussage, dass der Benutzer der Klasse der Originale zugeordnet wird, wenn das Verhältnis der statistischen Gesamtaussage über die Zugehörigkeit des Benutzers zu der Klasse der Originale zu der statistischen Gesamtaussage über die Zugehörigkeit des Benutzers zur Klasse der Fälscher den vorgegebenen Wert Eins überschreitet.

Für dieses erste Zuordnungskriterium I lassen sich anhand der Testdaten die $FAR_I$ sowie die $FRR_I$ ermitteln.

Liegt $FAR_I$ über einem vorgegebenen maximalen FAR-Sollwert $FAR_{Soll}$, so kann die Erfüllung eines zusätzlichen Zuordnungskriterium IIa verlangt werden. Ein Kosten-/Scorepunkt (m,n) wird dabei nur dann der Gruppe der Originale zugeordnet, wenn das Zuordnungskriterium I erfüllt ist und hier die Wahrscheinlichkeitsdichte der Kosten/Scores der Fälscher $M_f(m, n)$ unter einer bestimmten Grenze $p_{f,grenz}$ liegt:

$$M_f(m,n) < p_{f,grenz}$$

Zuordnungskriterium IIa

Diese Grenze wird dabei so festgelegt, dass sich bei den Testdaten die vorgegebene $FAR_{Soll}$ einstellt. Die Zuordnungsgrenze dieses Zuordnungskriteriums IIa ist daher eine Linie mit konstanter Wahrscheinlichkeitsdichte der Kosten/Scores der Fälscher.

Figur 9 zeigt beispielhaft für Biometrie 1 und 2 die Zuordnungsgrenzen G I und G IIa und den Kosten-/Scorebereich A (schraffiert), innerhalb dem ein Benutzer bei relativ streng vorgegebener $FAR_{Soll}$ authentifiziert wird.

Ist die ermittelte $FAR_I$ kleiner als die vorgegebene $FAR_{Soll}$, so wird statt Zuordnungskriterium IIa ein Zuordnungskriterium IIb verwendet. Ein Kosten-/Scorepunkt mit den Koordinaten (m,n) wird dabei nur dann der Gruppe der Originale zugeordnet, wenn entweder Zuordnungskriterium I erfüllt ist oder hier die Wahrscheinlichkeitsdichte der Kosten/Scores der Originale $M_o(m,n)$ über einer bestimmten Grenze $p_{o,grenz}$ liegt:

$$M_o(m,n) > p_{o,grenz}$$

Zuordnungskriterium IIb

Diese Grenze wird dabei so festgelegt, dass sich bei den Testdaten die vorgegebene Falschakzeptanzrate $FAR_{Soll}$ einstellt. Die Zuordnungsgrenze dieses Zuordnungskriteriums IIb ist daher eine Linie mit konstanter Wahrscheinlichkeitsdichte der Kosten und/oder Scores der Originale.

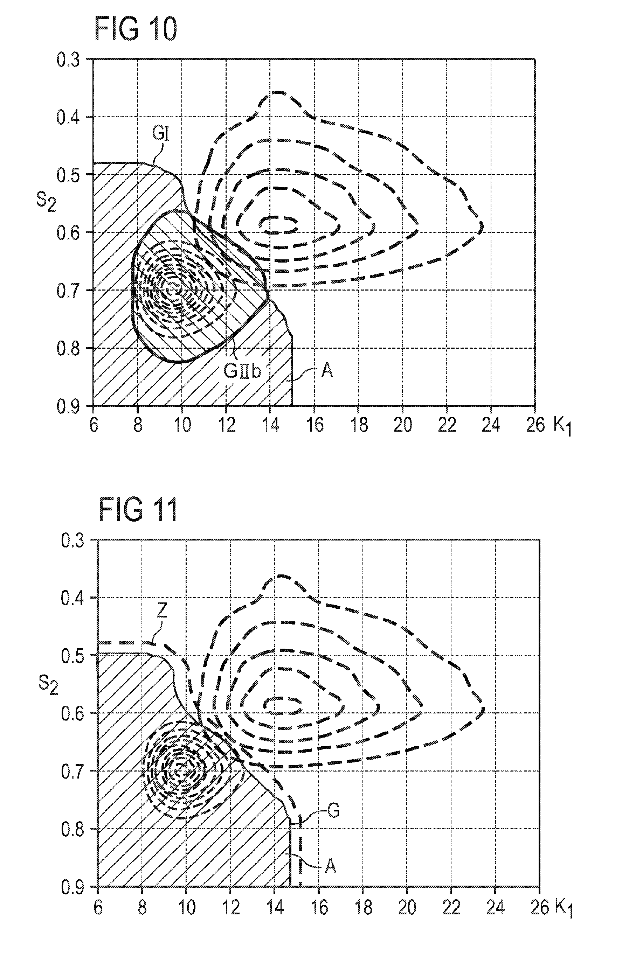

Die Figur 10 zeigt die Zuordnungsgrenzen G I, G IIb und den Annahmebereich A für die Kombination von Biometrie 1 und 2 bei weniger strenger Anforderung an die Falschakzeptanzrate $FAR_{Soll}$.

Statt als Zuordnungsgrenze nach dem Zuordnungskriterium I die Linie zu wählen, bei der das Verhältnis den vorgegebenen Wert Eins hat, lassen sich auch diejenigen Kurven heranziehen, für welche das Verhältnis der beiden Wahrscheinlichkeitsdichten einen beliebigen vorgegebenen Wert $V$ besitzt. Dieser vorgegebene Wert $V$ wird dabei so gewählt, dass sich für die Testdaten eine vorgegebene Falschakzeptanzrate $FAR_{Soll}$ einstellt. Ein Kosten-/Scorepunkt mit den Koordinaten (m,n) wird dabei der Gruppe der Originale zugeordnet, wenn gilt:

$$\frac{M_o(m,n)}{M_f(m,n)} > V.$$

In Figur 11 sind Zuordnungsgrenze G und Annahmebereich A dieser Methode beispielhaft für die Kombination von Biometrie 1 und Biometrie 2 bei relativ streng vorgegebener Falschakzeptanzrate $FAR_{Soll}$ dargestellt. Die Zugehörigkeitsgrenze Z entspricht einem Verhältnis mit dem vorgegebenen Wert V=1. Je nachdem, welches Verhältnis sich aufgrund der Wahrscheinlichkeitsdichten und der vorgegebenen $FAR_{Soll}$ ergibt, liegt die Zuordnungsgrenze G diesseits oder jenseits der Zugehörigkeitsgrenze Z.

Die Verfahren verwenden die Verteilung der Kosten/Scores der Einzelbiometrien als Grundlage für die multimodale Klassifikation. Zur Berechnung der mehrdimensionalen Wahrscheinlichkeitsdichten und der Werte zur Einstellung der vorgegebenen FAR werden ausreichend Daten der Einzelbiometrien benötigt. Beide Methoden ermitteln Akzeptanzbereiche für eine Kombination mehrerer Biometrien unter der Nebenbedingung eines vorgegebenen mittleren FAR-Sollwertes. In Abhängigkeit von den Daten und der daraus folgenden Struktur der Wahrscheinlichkeitsdichten können bei diesen Methoden auch mehrere, räumlich getrennte, Annahmebereiche entstehen. In einem Verifikationsschritt wird untersucht, ob die Kosten/Scores der Einzelbiometrien eines Benutzers innerhalb des Annahmebereiches für diese Kombination mit der erwünschten FAR liegen und so über Annahme oder Rückweisung des Benutzers entschieden.

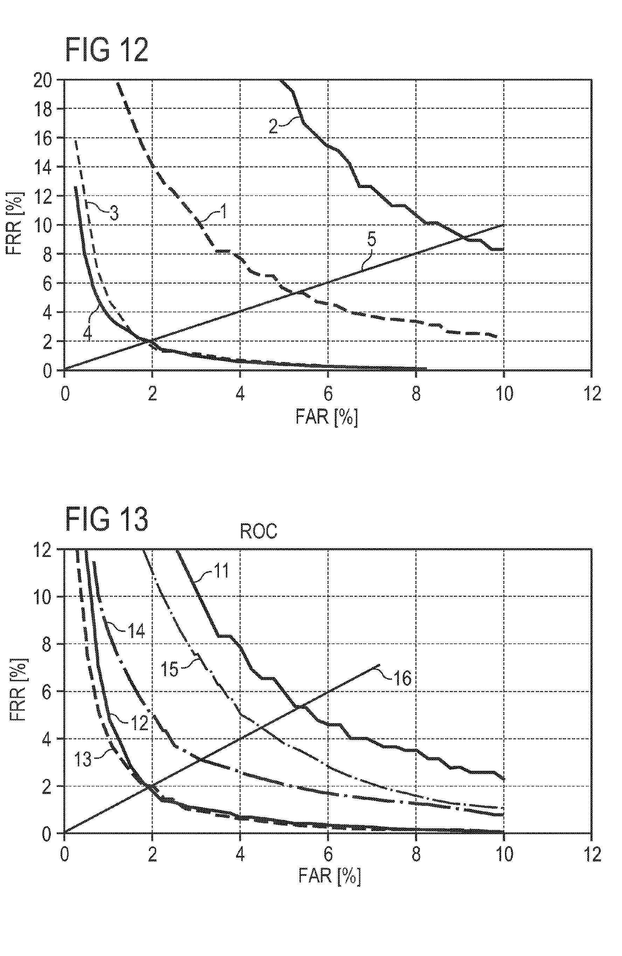

Die vorgestellten multimodalen Klassifikations-Verfahren sind für eine Kombination zweier beispielhafter Biometrien getestet. Für unterschiedliche Sollwerte der FAR ermittelt man die resultierenden Werte der FRR der Einzelbiometrien und der hier vorgestellten multimodalen Verfahren. In Figur 12 sind diese Fehlerraten dargestellt. Kurve 1 steht dabei für die Verwendung der Biometrie 1 als Einzelbiometrie, Kurve 2 für die Verwendung der Biometrie 2 als Einzelbiometrie, Kurve 3 für die Verwendung des erfindungsgemäßen Verfahrens mit einem vorgegebenen Wert V=1 und zusätzlichem Grenzwert gemäß Zuordnungskriterium IIa oder IIb, Kurve 4 für das Verfahren mit einstellbarem vorgegebenen Wert V und Kurve 5 für die EER-Linie. Es ist zu erkennen, dass die multimodalen Methoden bei gleichen FAR-Werten deutlich niedrigere FRR-Werte als die beiden Einzelbiometrien besitzen.

Die erfindungsgemäßen Verfahren zeigen relativ ähnliche Verläufe der Fehlerraten, wobei das Verfahren mit einem vorgegebenen Wert V=1 und zusätzlichem Grenzwert bei sehr kleinen FAR-Sollwerten etwas kleinere Falschrückweisungsraten erzeugt als das Verfahren mit einstellbarem vorgegebenen Wert V. Die EER liegt bei den multimodalen Verfahren deutlich unter der EER der beiden Einzelbiometrien.

Schließlich sollen die hier vorgestellten erfindungsgemäßen biometrischen Verfahren mit den eingangs beschriebenen UNDund ODER-Verknüpfungen nach dem Stand der Technik verglichen werden. In Figur 13 sind die Falschrückweisungsraten der Biometrie 1 (als beste Einzelbiometrie, Kurve 11), des erfindungsgemäßen Verfahrens mit einem vorgegebenen Wert V=1 und zusätzlichem Grenzwert (Kurve 12), des erfindungsgemäßen Verfahrens mit einstellbarem vorgegebenen Wert V (Kurve 13), der jeweils besten UND-Verknüpfung (Kurve 14) und der jeweils besten ODER-Verknüpfung (Kurve 15) in Abhängigkeit von dem vorgegebenen FAR-Sollwert dargestellt, was einem ROC-Diagramm (Receiver Operating Characteristic) entspricht. Kurve 16 ist die EER-Linie. Es ist zu erkennen, dass die erfindungsgemäßen biometrischen Verfahren deutlich bessere Eigenschaften bezüglich der Fehlerraten besitzen, als die logischen Verknüpfungen und die Einzelbiometrien.

Die erfindungsgemäßen multimodalen biometrischen Verfahren sind aufgrund ihrer geringeren Fehlerraten zu bevorzugen. Grundlage dieser Verfahren ist die Zugehörigkeit von Kosten-/Scorepunkten zur Klasse der Originale oder Fälscher. Die Zuordnungsgrenze ist daher im einfachsten Fall die Schnittkurve der beiden Wahrscheinlichkeiten. Reicht dieses Kriterium für eine bestimmte $FAR_{Soll}$ nicht aus, so werden insbesondere bei dem Verfahren mit einem vorgegebenen Wert von V=1 die Bereiche der Fälscherkosten ausgeschlossen bzw. der Kosten/Scores der Originale einbezogen, welche jenseits der Zugehörigkeitsgrenzlinie eine relativ hohe Wahrscheinlichkeitsdichte aufweisen, bis die FAR erreicht ist. Bei dem erfindungsgemäßen Verfahren mit einstellbarem vorgegebenen Wert V wird durch die Veränderung des Verhältnisses der Wahrscheinlichkeitsdichten eine modifizierte Zugehörigkeitsbedingung für eine bestimmte $FAR_{Soll}$ ermittelt. Die etwas besseren Ergebnisse des letztgenannten Verfahrens sind dadurch zu erklären, dass hier bei der Einstellung der erwünschten FAR jeweils beide Wahrscheinlichkeitsdichteverteilungen einbezogen werden und zum Erreichen kleiner FAR-Werte Bereiche ausgeschlossen werden, in denen die Wahrscheinlichkeitsdichte der Fälscher relativ hoch und die der Originale relativ klein ist.

In dem dargestellten Beispiel sind zwei Biometrien kombiniert. Durch die erfindungsgemäßen Verfahren lassen sich jedoch auch mehrere Biometrien miteinander kombinieren.

Die Vorteile der erfindungsgemäßen multimodalen biometrischen Verfahren sind

- fest einstellbare globale Falschakzeptanzrate FAR,
- geringe resultierende Falschrückweisungsraten FRR,
- einfache Integration unterschiedlicher Biometrien und Systeme (auch von unterschiedlichen Herstellern),
- Kombination von zwei und mehr Biometrien möglich,
- Berechnung mit reellen Verteilungen der Ähnlichkeitsmessungen, das heißt keine einschränkenden Annahmen,
- schnelle Zuordnungszeit, da nur ein Bereichvergleich durchgeführt werden muss, und
- Anwendbarkeit bei allen denkbaren Ähnlichkeitsmaßen wie Kosten, Scores und deren Kombinationen.

**Patentansprüche**

**1.** Multimodales biometrisches Verfahren,

- bei dem zumindest ein Benutzer einer von zumindest zwei Klassen zugeordnet wird,
- bei dem Ähnlichkeitsmaße verwendet werden, die Maße für die Ähnlichkeit von für den Benutzer ermittelten biometrischen Daten mit Referenzdaten für die jeweilige Klasse sind,
- bei dem für jede der zumindest zwei Klassen eine statistische Gesamtaussage über die Zugehörigkeit des Benutzers zu der Klasse in Abhängigkeit der Ähnlichkeitsmaße vorliegt,
- bei dem sich die statistische Gesamtaussage für jede der zumindest zwei Klassen aus der Verknüpfung der statistischen Aussagen zumindest zweier Einzelbiometrien für die jeweilige Klasse ergibt, wobei die statistischen Aussagen der Einzelbiometrien statistische Aussagen über die Zugehörigkeit des Benutzers zu der Klasse in Abhängigkeit von den Ähnlichkeitsmaßen sind, und
- bei dem der Benutzer einer der zumindest zwei Klassen zugeordnet wird, wenn ein Zuordnungskriterium erfüllt wird, das von den statistischen Gesamtaussagen abhängt.

**2.** Verfahren nach zumindest Anspruch 1,
bei dem der Benutzer mit dem Verfahren authentifiziert wird.

**3.** Verfahren nach zumindest einem der vorhergehenden Ansprüche,
bei dem sich zumindest eine der statistischen Aussagen einer Einzelbiometrie durch Abzählen und/oder Interpolation von Messdaten ergibt.

**4.** Verfahren nach zumindest einem der vorhergehenden Ansprüche,
bei dem sich die statistische Gesamtaussage durch Abzählen und/oder Interpolation der statistischen Aussagen der Einzelbiometrien ergibt.

**5.** Verfahren nach zumindest einem der vorhergehenden Ansprüche,
bei dem zumindest eine der statistischen Aussagen eine Wahrscheinlichkeitsdichte ist.

**6.** Verfahren nach zumindest einem der vorhergehenden Ansprüche,
bei dem die Verknüpfung der statistischen Aussagen zumindest zweier Einzelbiometrien, aus der sich die statistische Gesamtaussage ergibt, eine Multiplikation ist.

**7.** Verfahren nach zumindest einem der vorhergehenden Ansprüche,
bei dem die Ähnlichkeitsmaße Kosten und/oder Scores sind oder enthalten.

**8.** Verfahren nach zumindest einem der vorhergehenden Ansprüche,
bei dem die statistischen Aussagen und/oder die statistischen Gesamtaussagen normiert sind.

**9.** Verfahren nach zumindest einem der vorhergehenden Ansprüche,
bei dem das Zuordnungskriterium so gewählt wird, dass sich eine gewünschte Zuordnungsrate von Benutzern zu der einen der zumindest zwei Klassen ergibt.

**10.** Verfahren nach zumindest einem der vorhergehenden Ansprüche,
bei dem das Zuordnungskriterium erfüllt wird, wenn das Verhältnis der statistischen Gesamtaussage über die Zugehörigkeit des Benutzers zu dieser Klasse zu der statistischen Gesamtaussage über die Zugehörigkeit des Benutzers zur anderen der zumindest zwei Klassen jenseits eines vorgegebenen Wertes liegt.

**11.** Verfahren nach zumindest den Ansprüchen 9 und 10, bei dem der vorgegebene Wert genau oder in etwa gleich Eins ist.

**12.** Verfahren nach zumindest den Ansprüchen 9 und 10, bei dem der vorgegebene Wert so gewählt wird, dass sich eine gewünschte Zuordnungsrate von Benutzern zu der einen der zumindest zwei Klassen ergibt.

**13.** Verfahren nach zumindest einem der vorhergehenden Ansprüche,
bei dem das Zuordnungskriterium erfüllt wird, wenn die statistische Gesamtaussage über die Zugehörigkeit des Benutzers zu dieser Klasse jenseits eines vorgegebenen Grenzwertes liegt.

**14.** Verfahren nach zumindest den Ansprüchen 9 und 13, bei dem der Grenzwert so gewählt wird, dass sich eine gewünschte Zuordnungsrate von Benutzern zu der einen der zumindest zwei Klassen ergibt.

**15.** Anordnung, die eingerichtet ist, ein Verfahren nach zumindest einem der vorhergehenden Ansprüche auszuführen.

**16.** Programmprodukt für eine Datenverarbeitungsanlage, das Softwarecodeabschnitte enthält, mit denen ein Verfahren nach zumindest einem der vorhergehenden Ansprüche auf der Datenverarbeitungsanlage ausgeführt wird.

FIG 1

FIG 2

FIG 3

FIG 4

FIG 5

FIG 6

FIG 7

EP 1 274 047 A2

FIG 8

FIG 9

FIG 10

FIG 11

FIG 12

FIG 13